# EUROPÄISCHE PATENTSCHRIFT

(11) **EP 4 001 609 B1**
(45) Veröffentlichungstag und Bekanntmachung des Hinweises auf die Patenterteilung: **29.01.2025**
(21) Anmeldenummer: 20208491.9
(22) Anmeldetag: 18.11.2020
(51) Int. Cl.: F02B 33/42, F02B 29/06, F04B 45/053, F01L 7/12, F01L 7/02, F02B 25/20, F02B 33/04, F01L 1/38, F04B 35/00

(54) **VERFAHREN ZUM BETREIBEN EINES ZWEITAKT-VERBRENNUNGSMOTORS UND ZWEITAKT-VERBRENNUNGSMOTOR**
METHOD FOR OPERATING A TWO-STROKE COMBUSTION ENGINE AND TWO-STROKE COMBUSTION ENGINE
PROCÉDÉ DE FONCTIONNEMENT D'UN MOTEUR À COMBUSTION INTERNE À DEUX TEMPS ET MOTEUR À COMBUSTION INTERNE À DEUX TEMPS

(43) Veröffentlichungstag der Anmeldung: 25.05.2022
(73) Patentinhaber: Rottil UG (haftungsbeschränkt), 63571 Gelnhausen (DE)
(72) Erfinder: Hofmann, Arno, 63571 Gelnhausen (DE)
(74) Vertreter: Tergau & Walkenhorst Intellectual Property GmbH

(56) Entgegenhaltungen:
- CH-A- 162 817
- US-A1- 2004 144 081
- US-A1- 2011 197 866

## Beschreibung

Die Erfindung bezieht sich auf ein Verfahren zum Betreiben eines Zweitakt-Verbrennungsmotors mit einer Anzahl von Zylindern, in denen sich unter Druck stehendes Arbeitsgas arbeitsleistend entspannen kann, wobei das Gas-Auslassfenster des oder jedes Zylinders über einen Auslasskanal mit einer Auspuffanlage verbunden ist. Sie bezieht sich weiter auf einen derartigen Zweitakt-Verbrennungsmotor zur Durchführung des Verfahrens.

Verbrennungsmotoren oder Wärmekraftmaschinen finden in weiten Bereichen vielfältigen Einsatz, beispielsweise als Antriebseinheiten von Kraftfahrzeugen oder auch in stationärer Ausführung in Industrieanlagen oder anderen technischen Einrichtungen. Ein Verbrennungsmotor oder eine Wärmekraftmaschine kann dabei im Otto- oder Dieselverfahren mit unterschiedlichen flüssigen oder gasförmigen Brennstoffen betrieben werden. Den verschiedenen Bauformen ist gemeinsam, dass üblicherweise in einem (allgemein auch als "Brennraum" bezeichneten) Arbeitsraum eines Zylinders (oder in analoger Ausführung bei einem Wankelmotor in einer Drehscheibenkammer) ein komprimiertes Brennstoff-Luft-Gemisch zur Verbrennung gebracht wird, so dass in Reaktion hierauf ein in dem jeweiligen Zylinder verschiebbar angeordneter Kolben einen Arbeitshub ausführt und dabei eine Motorwelle arbeitsleistend antreibt. Nach der Vollendung des Arbeitshubs, also nach Expansion des verbrannten Arbeitsgases im Zylinder, wird das verbrannte Arbeitsgas als Abgas während eines Auslasstakts des jeweiligen Zylinders einer auslassseitig an diesen angeschlossenen Auspuffanlage zugeführt.

In gängiger Bauweise kann der Verbrennungsmotor dabei als 4-Takt-Motor ausgeführt sein, bei dem die Freigabe des in die Auspuffanlage führenden Abgassystems über ein im Zylinder angeordnetes Auslassventil erfolgt. In alternativer gängiger Bauweise kann der Verbrennungsmotor aber auch als 2-Takt-Motor ausgeführt sein, wobei die Freigabe des in die Auspuffanlage mündenden Abgassystems schlitzgesteuert erfolgt, indem der Kolben in der Endphase seiner Expansions-Hubbewegung über im Zylinder angeordnete Auslassschlitze hinweggleitet und diese anschließend freigibt. Ebenso ist gaseinlassseitig bei 4-Takt-Motoren üblicherweise ein entsprechendes Einlassventilsystem vorgesehen, wohingegen diese Funktionalität bei 2-Takt-Motoren ebenfalls durch im Zylindermantel angeordnete Spül- oder Überströmschlitze dargestellt wird. Weiterhin existieren Ventilsysteme auf Basis von Drehschiebern, bei denen Kanalquerschnitte im Zylinderkopf durch rotierende Drehschieber freigegeben bzw. verschlossen werden. Drehschiebersteuerungen werden für Zwei- und Viertaktverfahren angewendet. Die im Folgenden stellvertretend verwendeten Begriffe "Einlassventilsystem" und "Auslassventilsystem" beziehen sich daher im Falle von 2-Takt-Motoren ausdrücklich auch auf die entsprechenden Schlitzanordnungen im Zylindermantel, über die die entsprechenden Ventilfunktionen analog zur eigentlichen Verkörperung in 4-Takt-Motoren mit Hilfe von Tellerventilen bzw. Drehschiebern dargestellt werden.

Gängige Bauweise im Kolbenmotorenbereich ist heute vornehmlich der Viertaktmotor, unabhängig vom Brennverfahren (Diesel- bzw. Otto), wobei Motoren ab etwa einem Liter Hubraum großenteils mit Abgasturboaufladung versehen sind. Der Viertaktmotor dominiert sowohl den kompletten PKW-Motorenbereich, einschließlich Nutzfahrzeugantriebe, als auch Großmotoren. Im niedermotorisierten PKW-Anwendungsbereich wie auch bei allen Zweirädern werden Viertaktmotoren üblicherweise als Saugmotoren ohne Aufladung ausgeführt. Es existieren primär drei Gründe, weswegen sich der Viertaktmotor in unterschiedlichen Bauformen, Zylinderanzahlen und Hubräumen in einem so weiten Anwendungsspektrum durchgesetzt hat.

Zum einen ist hier die weitgehende Trennung des Ladungswechsels von Frisch- bzw. Abgas zu nennen, womit direkte Spülverluste von unverbranntem Frischgas in den Abgastrakt hinein vermieden und somit grundsätzlich emissionsarme Antriebe ermöglicht werden. Als "Frischgas" werden in diesem Zusammenhang und auch in der nachfolgenden Verwendung sowohl reine Luft als auch Luft-Kraftstoff-Gemische bezeichnet, je nachdem wie die Gemischaufbereitung lokal und temporär erfolgt. Zweitens ist in Verbindung mit der Abgasturboaufladung der Gesamtwirkungsgrad des Motors steigerungsfähig, indem durch die Ladungsdichteerhöhung Reibungs- und Wandwärmeverluste kaum zunehmen, der effektive Mitteldruck des Motors aber etwa proportional zur Luftdichtesteigerung erhöht wird. Die Verwertung der sonst ungenutzt ins Freie strömenden Abgasenthalpie durch den Turbolader, in Verbindung mit Drehzahlabsenkung (so genanntes "downspeeding") bzw. Hubraum (Zylinder-)-reduzierung ("downsizing"), lassen den Motor in einem thermodynamisch günstigeren Betriebspunkt mit höherem Liefergrad und weiterer Entdrosselung laufen. Drittens ist der Viertakt-Ottomotor gegenüber einem Zweitaktmotor durch das Ausschieben von Restgas aus dem Zylinder sehr gut teillastfähig betreibbar. Der hohe Restgasanteil im Zweitakt-Ottomotor bei Teillastbetrieb kann demgegenüber Zündaussetzer bzw. Verbrennungsabbruch hervorrufen, was mit sehr hohen HC-bzw. CO-Emissionen einhergeht.

Der Zweitaktmotor kommt demzufolge in der heutigen Zeit lediglich noch in einer Anzahl von vollkommen unterschiedlichen Nischenanwendungen industriell zum Einsatz. Hier wären zum einen Großmotoren für Schiffsantriebe zu nennen, die im Zweitaktdieselverfahren mit Abgasturboaufladung arbeiten. Die Spülung des Frischgases wird hier mittels Schlitzsteuerung (Überströmkanäle im UT-Bereich) im Zylinder und Auslassventilen im Zylinderkopf (kopfgesteuert) als Gleichstromspülung vollzogen. Die Motoren sind oftmals über eine Kreuzkopfanlenkung des Pleuels extrem langhubig ausgelegt. Durch das Dieselbrennverfahren entstehen keine Spülverluste von Brennstoff, und ebenso ist eine problemlose Teillastfähigkeit gegeben, da durch die Abgasturboaufladung (positives Spülgefälle) Abgas selbst bei Teillast ausreichend aus dem Zylinder gespült wird. Das asymmetrische Steuerdiagramm der Auslassventile ermöglicht dabei, das Auslassende vor das Spülende der Überströmkanäle zu legen und damit eine Aufladung des Motors zu bewirken. Die Leistungsdichte, Gleichförmigkeit des Kurbelwellendrehmoments und vor allem der spezifische Kraftstoffverbrauch sind bei diesem Zweitaktmotorenprinzip besser gegenüber allen Viertaktalternativen.

Nachteilig ist neben dem grundsätzlich emissionsreichen Betrieb mit Bunkeröl als Treibstoff der Schmierölverbrauch an der Zylinderwand, der durch das Mitnehmen von Schmierstoff über das Frischgas an den Spülschlitzen entsteht und zu höheren CO-Emissionen beiträgt. Das Bauprinzip des kopfgesteuerten Zweitaktmotors ist auf Bauraum-optimierte Fahrzeugmotoren zudem nicht übertragbar, da durch den Kreuzkopfkurbeltrieb und den Ventiltrieb im Zylinderkopf eine nicht akzeptable Bauhöhe des Gesamttriebwerks entsteht. Zudem verhindert die thermodynamisch günstige Langhubigkeit in Verbindung mit kleinem Kolbendurchmesser ausreichende Spülquerschnitte im Zylinderkopf für die im PKW-Motorenbereich üblichen Betriebsdrehzahlen.

Zweitaktmotoren mit Schlitzspülung und Aufladung sind von der Patentschrift CH162817 bekannt, wobei in einer Endphase des Auslasstakts des Zylinders die gasseitige Verbindung zwischen dem Gas-Auslassfenster und der Auspuffanlage unterbrochen und stattdessen das Gas-Auslassfenster über den Auslasskanal mit unter Überdruck stehendem Frischgas beaufschlagt wird.

Weitere noch existierende industrielle Anwendungen von Zweitaktmotoren finden sich bei Zweirädern, insbesondere in der 50ccm-Klasse, Bootsantrieben (Außenborder) und tragbaren Handgeräten (Motorsägen, Trimmer etc.). Hierbei handelt es sich ausschließlich um Kurbelgehäuse-gespülte Motoren mit Umkehrspülung und reiner Schlitzsteuerung des Gaswechsels im Zylinder. Neben niedrigen Fertigungskosten ist bei den Handgeräten die hohe Leistungsdichte und Drehmomentgleichförmigkeit entscheidend.

Im niedrigpreisigen Fahrzeugsegment liegen die Vorteile des Zweitaktmotors ebenso in den günstigeren Fertigungskosten gegenüber der Viertaktbauweise, wie auch in den merklich geringeren Reibleistungsverlusten (kein Ventiltrieb!) und den besseren Drehmomentverläufen an der Kurbelwelle, die in dieser Leistungsklasse für spürbar bessere Fahrleistungen sorgen. Obwohl Fahrzeughersteller jedoch ihre Zweitaktmotoren zunehmend mit Kraftstoffeinspritzung ausrüsten und die Spülverluste von Kraftstoff erheblich reduzieren konnten, sind die Resultate kaum ausreichend, um die Abgasgrenzwerte der Euro-5-bzw. der Euro-6-Norm zukünftig zu unterschreiten. Die Ursache hierfür liegt nach wie vor im offenen Gaswechsel des symmetrischen Steuerdiagramms eines schlitzgesteuerten Zweitaktzylinders, dessen Auslasskanal bis zu 35° KW (KW=Kurbelwelle) nach dem Schließen der Überströmkanäle geöffnet bleibt. Selbst bei Direkteinspritzung im Zylinderkopf muss der Einspritzbeginn für eine gute Homogenisierung des Gemischs frühzeitig, sprich bei noch geöffnetem Auslasskanal beginnen, so dass weiterhin Spülverluste von unverbranntem Kraftstoff im Auslasstrakt unvermeidbar sind, die zu unerwünschten HC-Emissionen führen.

Das hier dargestellte Problem der Spülverluste von Luft oder Luft-Kraftstoff-Gemischen wird technisch als unzureichender "Fanggrad" beim Ladungswechsel des Motors bezeichnet. Der Fanggrad gibt dabei den Anteil der im Arbeitszylinder verbleibenden Frischluftmenge gegenüber der Frischluftspülmenge an, die für die Verbrennung im Zylinder auch tatsächlich zur Verfügung steht; dieser erreicht in der Praxis selten höhere Werte als 75-85%. Im Zweiradbereich wird zur Liefergradsteigerung wie auch zur Fanggraderhöhung des Zweitaktmotors häufig eine s.g. Resonanzauspuffanlage verwendet, deren Wirkung darin besteht, durch geeignete Querschnittsänderungen im Abgasrohr während der Spülphase anfangs einen Unterdruck im Zylinder zu generieren (Liefergraderhöhung) und zum Ende der Spülphase einen Überdruck im Auspuff zu erzeugen, um in den Abgastrakt gelangtes Frischgas in den Zylinder zurückzuschieben (Fanggraderhöhung). Geometrisch hat ein solcher Auspuff die Form einer "Birne" mit einem sich stetig erweiternden Abgasrohr (Diffusor) nahe dem Zylinder zur frühzeitigen Generierung von zurücklaufenden Unterdruckwellen und einem sich verengenden Auspuffende (Gegenkonus) zur Reflektion von Überdruckwellen. Nach dem leistungsbestimmenden Teil des Resonanzauspuffs folgt anschließend meist noch das Schalldämpfersystem.

Diese Art der Auspuffanlage bewirkt eine Aufladung des Motors über Resonanzschwingungen der Abgassäule, und sie wurde im Zweitaktmotor-dominierten Rennsport früherer Jahre grundsätzlich genutzt. Die Funktionalität dieser Resonanzauspuffanlage bedingt grundsätzlich das symmetrische Steuerdiagramm eines schlitzgesteuerten Motors. Nachteilig bei der Resonanzauspuffanlage wirkt vornehmlich die Tatsache, dass die positiven Resonanzeffekte (Aufladung) lediglich in einem engen Drehzahlbereich (ca. 1500 Motorumdrehungen pro Minute) wirken, der für Gebrauchsmotoren nicht ausreicht, und der darüber hinaus enorme Bauraumbedarf dieser Auspuffanlagen, deren Länge durch die erforderliche Wellenlänge der Resonanzdrehzahl bestimmt wird und mit fallender Betriebsdrehzahl des Motors zunimmt. In der Praxis liegen die Auspufflängen für Rennsportanwendungen im Bereich um einen Meter und für niedertourige Gebrauchsmotoren bis zu zwei Metern, was in Fahrzeugen kaum unterzubringen wäre, einhergehend mit dem Umstand, dass für jeden Motorzylinder ein eigenes Auspuffsystem erforderlich ist.

Ohne weitere Maßnahmen, den Fanggrad des Zweitaktmotors zu erhöhen, wird dieses Motorprinzip aus Emissionsgründen (HC) zukünftig wohl im Fahrzeugeinsatz bzw. auch im höheren Leistungsbereich von Luftfahrt- oder Nautikanwendungen verschwinden. Die durch die Verlustschmierung der Zylinderlauffläche primär entstehenden CO-Emissionen (teilverbranntes Öl) konnten in den letzten Jahren erheblich reduziert werden. Dazu trugen verbesserte Oberflächentopographien von Zylinderlaufflächen, Kolbenhemdbeschichtungen und Kolbenringen bei, ebenso wie der Einsatz von hochtemperaturbeständigeren Schmierstoffen auf Esterbasis, die darüber hinaus rußfrei verbrennen. Das Öl-Kraftstoff-Mischungsverhältnis konnte mit diesen Maßnahmen an Versuchsmotoren auf bis zu 1:300 abgesenkt werden, womit sich absolute Schmierstoffverbräuche von weniger als 1g/kWh realisieren lassen.

Entfällt darüber hinaus die Notwendigkeit, den Kurbeltrieb über die Verlustschmierung mit zu versorgen, was durch eine separate Umlaufschmierung möglich wäre, reduziert sich der Schmierstoffverbrauch nochmals und läge damit nahe den Werten von 0,3-0,5 g/kWh, die ein heutiger Viertaktmotor erreicht. Letztendlich können auf Kohlenstoffbasis "trocken geschmierte " Kolben-Zylinderpaarungen für einen vollkommen ölfreien Betrieb im Verbrennungsraum des Zylinders sorgen.

Dem ungünstigen Teillastverhalten des Zweitaktmotors mit hohen inneren Abgasrückführungsraten ("AGR Raten"), die zu Zündaussetzern führen, kann durch Aufladung und entsprechende Lastpunktanhebung begegnet werden. Darüber hinaus ist eine weitere Betriebspunktverlagerung zu hohen Lasten durch "Zylinderabschaltung" bzw. Einspritzung und Zündung in jedem zweiten Arbeitsspiel ("Viertakten") möglich.

Der offene Ladungswechsel des Zweitaktmotors mit seinem stark schwankendem Fanggrad macht eine stöchiometrische Zumessung der Kraftstoffmenge zum Luftaufwand nahezu unmöglich, weshalb ein geregelter Lambda-1-Betrieb mit 3-Wege-Katalysator zur Abgasnachbehandlung kaum umsetzbar ist. Zweitaktmotoren werden daher üblicherweise mit Oxidationskatalysatoren ungeregelt und vorteilhaft mit Luftüberschuss betrieben. Dieses Verfahren ist kostengünstig umsetzbar, kann jedoch nicht NOx-Emissionen nachbehandeln. Diese NOx-Rohemissionen sind bei Zweitaktmotoren im Allgemeinen geringer als bei Viertaktmotoren, da Zweitakter schnellere Gemischverbrennungen erzeugen und tendenziell hohe AGR-Raten vertragen, jedoch die unbehandelten NOx-Emissionen außerhalb der heutigen Grenzwerte liegen. Eine Möglichkeit, die Entstehung von NOx drastisch zu reduzieren, ist die Wassereinspritzung, um mit der Verdampfungsenthalpie des Wassers die Temperaturspitzen bei der Verbrennung herabzusetzen. Insbesondere ist die Kombination der Wassereinspritzung in Verbindung mit einem Kohlenstoff basierten Trockenschmierverfahren von Kolben und Zylinderwand als vorteilhaft anzusehen, da es zum einen keine Ölverdünnung im Arbeitsraum durch Wasserkondensat geben kann und keine korrosionsgefährdeten Bauteile vorhanden sind. Die Zylinderlaufbahn kann auf keramischer Basis ausgelegt sein (SiC etc.), Kolben und Kolbenringe sind auf Kohlenstoffbasis auch nicht korrosionsgefährdet und der Arbeitsraum des Zylinderkopfs weist keine eisenhaltigen Komponenten wie Ventile, bzw. Ventilsitze eines Viertaktmotors auf.

Trotz der geschilderten Maßnahmen weist der Zweitaktmotor somit selbst in moderner Bauweise erhebliche Nachteile insbesondere hinsichtlich der Abgasemissionen auf, die einen weiteren Einsatz trotz der unbestreitbaren Vorteile wie kompakte Bauweise, leichtes Gewicht etc eher fraglich erscheinen lassen.

Der vorliegenden Erfindung liegt nunmehr die Aufgabe zu Grunde, ein Verfahren zum Betreiben eines Zweitakt-Verbrennungsmotors der oben genannten Art anzugeben, mit dem auf besonders einfache und zuverlässige Weise die nachteiligen Schadstoff-Emissionen besonders gering gehalten werden können. Weiterhin soll ein zur Durchführung des Verfahrens besonders geeigneter Zweitakt-Verbrennungsmotor angegeben werden.

Bezüglich des Verfahrens wird diese Aufgabe erfindungsgemäß gelöst, indem in einer Endphase des Auslasstakts des jeweiligen Zylinders die gasseitige Verbindung zwischen dem Gas-Auslassfenster und der Auspuffanlage unterbrochen und stattdessen das Gas-Auslassfenster über den Auslasskanal mit unter Überdruck stehendem Frischgas, vorzugsweise reiner Luft als Frischgas, beaufschlagt wird.

Moderne Zweitaktmotoren verfügen häufig über mehrere Gasauslassfenster im Zylinder, die üblicherweise in eine gemeinsame Auspuffanlage münden. Selbst wenn im Text der Einfachheit halber auf lediglich ein Gasauslassfenster Bezug genommen wird, so ist damit selbstverständlich explizit die Gesamtzahl aller in einem Zylinder vorhandenen Gasauslassfenster stellvertretend gemeint und soll diese ebenfalls mit umfassen.

Die Erfindung geht von der Überlegung aus, dass ein wesentlicher Grund für die nachteiligen Abgas- oder Emissionswerte herkömmlicher Zweitaktmotoren durch die Spülverluste und damit einhergehend den vergleichsweise geringen Fanggrad bedingt sind. Bei der konventionellen schlitzgesteuerten Spülung im Zweitaktmotor öffnet nämlich im Expansionshub des Kolbens zuerst der Auslass, um den Zylinderinnendruck durch ausströmendes Abgas zu entspannen (notwendiger Vorauslass). Nachfolgend öffnen der bzw. die Einlass- oder Überströmkanäle, die Frischgas aus dem Kurbelgehäuse oder ggf. auch aus einem vorgeschalteten Lader oder Kompressor in den Zylinder einlassen. Bauartbedingt bleibt jedoch beim schlitzgesteuerten Zweitaktmotor der Auslass länger geöffnet als die Überströmkanäle. Vornehmlich in dieser zeitlichen Phase gegen Ende des Ladungswechsels gelangt im Zylinder befindliches Frischgas über das noch geöffnete Gas-Auslassfenster in den Auslasskanal, was die hohen Anteile der Frischgasspülverluste bedingt.

Übliche Steuerzeiten des schlitzgesteuerten Zweitaktmotors liegen im Auslassbereich üblicherweise zwischen 120-190°KW (KW=Kurbelwelle) und im Bereich des (Frischgas)-Überströmens zwischen 90-140°KW. Hieraus ergeben sich Steuerlängen für den Vorauslass von ca. 15-35°KW. Die großen Steuerlängen beziehen sich dabei vornehmlich auf hochdrehende Motoren, wohingegen die kurzen Steuerzeiten auf niedrige Betriebsdrehzahlen ausgelegt sind. Um die durch diese Aspekte bedingten Spülverluste besonders gering zu halten, sollte eine Rückspülung des in den Auslasskanal gelangten Frischgases in den Zylinder hinein erzeugt werden, so dass insgesamt der Fanggrad verbessert und das rückgespülte Frischgas der regulären Verbrennung zugeführt werden kann.

Um dies zu ermöglichen, ist eine verfahrenstechnische Nutzung des dem Gas-Auslassfenster des Zylinders benachbarten Teils des Auslasskanals als temporärer Rückspülkanal vorgesehen, wobei der Auslasskanal zum zeitlichen Ende des Ladungswechsels hin als Abgas führender Kanal vorzeitig und vorübergehend stillgelegt und stattdessen in einen zusätzlichen Spülkanal für Frischgas umfunktioniert werden soll. Damit sollen Spülverluste von Luft-Kraftstoff-Gemischen, die sich im Auslasskanal befinden, mittels vorkomprimierter Frischluft in den Zylinder zurückgeschoben werden.

Vorteilhafte Ausgestaltungen der Erfindung sind Gegenstand der Unteransprüche.

In vorteilhafter Weiterbildung, und insbesondere um den Wirkungsgrad des Motors besonders zu steigern, sollte diese Rückspülung einhergehen mit einer Aufladung oder Ladungsdichtesteigerung im Zylinder. Dazu wird vorzugsweise durch die Zuführung des unter Überdruck stehenden Frischgases in den Zylinder eine Aufladung und/oder Ladungsdichtesteigerung des im Zylinder befindlichen Gasvolumens erzeugt.

Die Endphase des Auslasstakts, in der die Umschaltung der gasseitigen Verbindung des Gas-Auslassfensters mit der Auspuffanlage hin zu einer gasseitigen Verbindung des Gas-Auslassfensters mit der Frischgas unter Überdruck führenden Frischgasleitung vorgesehen ist, ist besonders bevorzugt hinsichtlich der Schaltzeitpunkte an die Auslegung des jeweiligen Motors bzw. Zylinders angepasst. Der Startzeitpunkt für diese Endphase des Auslasstakts wird bevorzugt zu einem abhängig vom durch Last und Drehzahl bestimmten Betriebspunkt des Motors geeignet gewählten Zeitpunkt nach dem Öffnen der Einlass-Überströmkanäle und vor dem Schließen der Einlass-Überströmkanäle des jeweiligen Zylinders gewählt.

Dieser Startzeitpunkt kann insbesondere auch davon abhängig sein, welches Brennverfahren (Otto, Diesel, HCCI, Schichtladung, etc.) angewendet werden soll, da der Startzeitpunkt für die Rückspülung von Frischgas auch das Ende des Ausschiebens von Abgas aus dem Zylinder bedeutet. Die im Zylinder quantitativ verbleibende Abgasmenge mit ihrer hohen Temperatur ist vorteilhaft zur Steuerung der Zündeinleitung für die HCCI-Brennverfahren (HCCI = Homogeneous charge compression ignition) geeignet, womit eine große Spreizung des Startzeitpunktes zwischen 30° nach Überströmer öffnet und Überströmer schließt vorteilhaft für die Regelung eines solchen Brennverfahrens ist.

Für hohe Motorlasten bzw. für einen homogen betriebenen Ottomotor wird der Startzeitpunkt für die Endphase des Auslasstakts bevorzugt kurz vor dem Schließen der Überströmkanäle gewählt, um zum einen die Spülquerschnitte der Überströmkanäle voll auszunutzen und andererseits ein Rückschieben von bereits in den Zylinder gespültem Frischgas in die Überströmkanäle zu vermeiden. Ergänzend dazu ist vorteilhafterweise der Endpunkt für die genannte Endphase des Auslasstakts gleich dem Endpunkt des Auslassvorgangs an sich gewählt, so dass zweckmäßigerweise die Umschaltung der gasseitigen Verbindung innerhalb des Auslasstakts mit Schließen des Gas-Auslassfensters durch den im Zylinder laufenden Kolben beendet wird.

Die für die Rückspülung vorgesehene, für die Einspeisung in den Auslasskanal vorgesehene Frischluft wird ganz besonders bevorzugt mit Überdruck bereitgestellt, so dass ein sicheres Rückspülen durch den Auslasskanal in den Zylinder hinein auch bei den darin vorherrschenden Druckverhältnisses gegen den Abgasgegendruck gewährleistet ist. Um dies zu ermöglichen, kann die Frischluft in einer geeignet gewählten Kompressor-Einheit, beispielsweise einer externen Aufladevorrichtung und/oder der motoreigenen Kurbelkasten- oder Kolbenpumpe, vorzugsweise in einer mechanisch oder elektrisch angetriebenen Kompressoreinheit oder einer mechanisch angetriebenen Membranpumpe, vorverdichtet oder komprimiert werden. In ganz besonders bevorzugter und als eigenständig erfinderisch angesehener Ausgestaltung ist für die Komprimierung eine abgasbetriebene Aufladevorrichtung vorgesehen, bei der insbesondere die im Abgasstrom mitgeführte Enthalpie und/oder die mitgeführte Druckenergie zur Verdichtung des Frischgases genutzt wird. Ganz besonders bevorzugt und in als eigenständig erfinderisch angesehener Ausgestattung wird ein solchermaßen ausgelegter Zweitaktmotor zum Zweck der Verdichtung des Frischgases mit einer Abgasladepumpe kombiniert, wie sie beispielsweise aus der EP 2 846 019 A1, aus der EP 2 846 020 A1, aus der EP 3 061 970 A1 oder aus der EP 3 282 109 A1 bekannt ist.

In dieser besonders bevorzugten und als eigenständig erfinderisch angesehenen Ausgestaltung wird während des Auslasstakts das aus dem Zylinder abströmende Abgas in einer ersten Taktphase des Auslasstakts ganz oder teilweise der Primärseite einer Abgasladepumpe zugeführt und dort arbeitsleistend weiter entspannt, bevor in einer zweiten Taktphase des Auslasstakts das in der Primärseite der Abgasladepumpe befindliche, nachentspannte Abgas gemeinsam mit sich ggf. noch im Zylinder befindlichem Abgas zur Auspuffanlage geleitet wird. Vorteilhafterweise wird dabei die in der Abgasladepumpe auf der Primärseite in Expansionsarbeit umgewandelte Energie des Abgases ganz oder teilweise auf der Sekundärseite in Kompressionsarbeit des zur Einspeisung in den Auslasskanal vorgesehenen Frischgases umgewandelt.

Vorteilhafterweise wird dabei mittels einer geeigneten Ventilvorrichtung in einer ersten Phase des Auslasstakts zu Beginn des Auslassöffnens im Arbeitszylinder der Abgasstrom im Auslasskanal ausschließlich zur Primärseite der Aufladevorrichtung oder der Abgasladepumpe geleitet, in einer zweiten Phase sowohl die Kanalverbindung vom Auslasskanal zur Abgas- oder Auspuffanlage als auch die Kanalverbindung von der Abgasladepumpe zur Auspuffanlage freigegeben und in einer dritten Phase während des Schließens des Auslassfensters im Arbeitszylinder sowohl der Abgastrakt zur Abgas- oder Auspuffanlage als auch der Abgastrakt zur Aufladevorrichtung verschlossen und gleichzeitig der Kanal zur Frischgaseinblasung in den Auslasskanal geöffnet. In alternativer vorteilhafter Ausgestaltung, bei Verwendung eines Turboladers als Aufladevorrichtung, kann die zweite Phase auch entfallen, da das Abgas bei dieser Bauweise aus dem Zylinder über die Ventilvorrichtung vollständig durch den Turbolader geleitet werden kann. Eine Ableitung von Abgas in Umgehung des Turboladers hätte hier allenfalls die Aufgabe einer Ladedruckbegrenzung über ein s.g. Wastegate-Ventil.

Bezüglich des Zweitakt-Verbrennungsmotor wird die genannte Aufgabe gelöst durch ein in den Auslasskanal geschaltetes Mehrwege-Umschaltventil, über das das Gas-Auslassfenster sowohl mit der Auspuffanlage als auch mit einer Frischgas-Überdruckleitung verbunden ist. Damit kann die nach dem erfindungsgemäßen Konzept vorgesehene Rückspülung von in den Auslasskanal gelangten Gasanteilen auf besonders einfach und zuverlässige Weise erreicht werden. Denn durch ein solches Mehrwege-Umschaltventil kann einerseits die für die Rückspülung als notwendig angesehene Absperrung des Gaszuflusses zur Auspuffanlage erreicht werden, so dass ab diesem Zeitpunkt Frischgas, das im Abgaskanal zwischen Zylinder und der Ventilvorrichtung vorhanden ist, nicht mehr zur Abgasanlage als Frischgasverlust weiterströmen kann. Andererseits kann im gleichen Zuge die Beaufschlagung mit dem bereitgehaltenen, unter Überdruck stehenden Frischgas erfolgen, indem das Mehrwege-Umschaltventil den entsprechenden Gaseinlass in den Auslasskanal hinein freigibt.

Vorteilhafterweise ist dabei über das Mehrwege-Umschaltventil alternativ eine gasseitige Verbindung zwischen dem Gas-Auslassfenster und der Auspuffanlage oder zwischen dem Gas-Auslassfenster und der Frischgas-Überdruckleitung herstellbar. Auf diese Weise ist es mittels des Umschaltventils problemlos möglich, den Abgaskanal hin zur Auspuffanlage vorübergehend zu verschließen und gleichzeitig die Einspeisung des unter Überdruck stehenden Frischgases in den Auslasskanal vorzunehmen.

Für eine besonders zuverlässige Rückspülung beträgt, ja nach individueller Auslegung des Motors und nach seinem gewählten Betriebspunkt, das Volumen des Auslasskanals zwischen dem Gas-Auslassfenster des jeweiligen Zylinders und dem Mehrwege-Umschaltventil vorteilhafterweise mindestens 10% und/oder höchstens 180% des geometrischen Hubvolumens des jeweiligen Zylinders.

Im Anschluss an die Ventilvorrichtung stromabwärts im Strömungsbereich der Auspuffanlage kann vorzugsweise eine Abgasnachbehandlung (Katalysator, Partikelfilter. etc) vorgesehen sein. Im Falle einer Turboladeranwendung würde die Abgasnachbehandlung stromabwärts nach der Turbine angeordnet werden.

Zur auslegungsgemäß vorgesehenen Bereitstellung des Frischgases unter Überdruck ist vorteilhafterweise die Frischgas-Überdruckleitung eingangsseitig mit einer Kompressor-Einheit verbunden. Diese kann als externe Aufladeeinheit ausgestaltet sein, oder aber es kann hierfür auch die motoreigene Kolbenpumpe über die oszillierende Kolbenunterseite herangezogen werden. Als Vorrichtung zur Vorkompression von Ladeluft, mit der bei Bedarf durch den Auslasskanal in den Zylinder rückgespült werden kann, eignen sich grundsätzlich alle mechanisch, elektrisch, als auch durch Abgasenergie angetriebenen Verdichter oder Fördereinrichtungen. In ganz besonders bevorzugter und als eigenständig erfinderisch angesehener Ausgestaltung ist die Kompressoreinheit aber durch eine abgasbetriebene Aufladevorrichtung gebildet.

Vorzugsweise ist hierfür eine Membranpumpe gemäß der Lehre der vorstehend bereits erwähnten Druckschriften vorgesehen, die von Abgasdruckwellen angetrieben Frischgas fördert und komprimiert. Die Abgasladepumpe zeichnet sich durch sehr niedrige Abgasgegendrücke aus, die für den offenen Ladungswechsel des Zweitaktmotors essentiell von Vorteil sind, und vor allem durch die Nutzung eines erheblichen Teils der Abgasrestenergie beim Öffnen des Auslassvorgangs.

In weiterer vorteilhafter Ausgestaltung und im Sinne einer besonders effizienten Bauweise ist eine solche abgasbetriebene Aufladevorrichtung als Membranpumpe ausgeführt, die ebenfalls über das Mehrwege-Umschaltventil angesteuert wird und dazu sekundärseitig über die Frischgas-Überdruckleitung mit dem Mehrwege-Umschaltventil und primärseitig mit dem Auslasskanal verbunden ist. Ganz besonders bevorzugt ist das Mehrwege-Umschaltventil dabei als Drei-Wege-Ventil ausgeführt, über das bedarfsweise eine gasseitige Verbindung zwischen dem Gas-Auslassfenster und der Primärseite der Kompressoreinheit herstellbar ist.

Vorteilhafte weiterreichende verfahrenstechnische Ausführungen in Kombination mit der Erfindung können insbesondere sein:
- Die Frischgasspülung des Zylinders über die Überströmkanäle kann konventionell über das Kurbelgehäuse als Kurbelkastenpumpe erfolgen, wahlweise einhergehend mit einer Mischungs-, bzw. Getrenntschmierung der Kurbeltriebs durch Ölzugabe an das Frischgas.
- Die vorkomprimierte Luft aus einem Verdichter oder Aufladeaggregat kann wahlweise ausschließlich zur Rückspülung über den Auslasskanal genutzt werden oder zusätzlich auch ganz oder teilweise die Frischluftversorgung zur Kurbelkastenspülung übernehmen.
- Alternativ lässt sich die Frischgasversorgung der Überströmkanäle aus dem Aufladeaggregat mit komprimierter Frischluft direkt bewerkstelligen, ohne den Kurbelraum zu passieren. Diese Ausführung der Zylinderspülluftversorgung besitzt den Vorteil, den Kurbeltrieb und dessen Ölschmierung von der Zylinderschmierung vollständig entkoppeln zu können, indem eine Ölsperre zwischen Kurbeltrieb und Kolben angebracht wird.
- Die Trennung von Kolbenschmierung und Kurbelraum kann über einen so genannten Kreuzkopfkurbeltrieb erfolgen, wie er beispielsweise bei extrem langhubigen Großmotoren Anwendung findet. Der Kreuzkopf selbst, der u.a. ein oszillierendes Linearlager darstellt, wird dabei von der Druckumlaufschmierung des Kurbeltriebs mit Öl versorgt und besitzt zum Raum unterhalb des Kolbens eine Ölabdichtung, die zum einen das Eintreten von Schmieröl in den Kolbenunterraum verhindert und zum anderen als Gassperre zwischen Kurbel- und Kolbenunterraum dient.
- Der Raum zwischen Kolbenunterseite und Kreuzkopflagerung variiert sein Volumen mit der Bewegung des Kolbens und kann als ausschließliche bzw. zusätzliche Frischgaskolbenpumpe für den Ladungswechsel genutzt werden. In ausschließlicher Weise übernimmt die Frischgaskolbenpumpe die Vorverdichtung des Frischgases, welches über die Überströmkanäle in den Zylinder eingeblasen wird, um damit u.a. die Startfähigkeit des Motors sicher zu stellen. Alternativ in ausschließlicher Anwendung kann die Kolbenfrischgaspumpe komprimierte Frischluft im UT-Bereich des Kolbens über die Ventilvorrichtung dem Auslasskanal zuführen und dementsprechend in den Zylinder spülen und nachladen. Die zusätzliche Verwendung der Frischgaskolbenpumpe mit einem weiteren Verdichter (Kompressor, Turbo, Abgasladepumpe etc.) kann einerseits zur Luftaufwandserhöhung des Motors genutzt werden, andererseits kann die Frischgasspülung des Zylinders über die Überströmkanäle respektive über den Auslasskanal von zwei separaten Verdichtern vollzogen werden. Die Steuerung des Gaswechsels der Frischgaskolbenpumpe kann durch Schlitze im Zylinder, Membranventile, Drosselklappen (Teillast) oder auch durch die Ventilvorrichtung erfolgen.
- Beim kopfgesteuerten Viertaktmotor nehmen mit der thermodynamisch vorteilhaften langhubigen Auslegung des Kurbeltriebs die Spülquerschnittsflächen (kleinere Ventildurchmesser) im Zylinderkopf ab, was sich nachteilig für einen drosselarmen Ladungswechsel darstellt. Der schlitzgesteuerte Zweitaktmotor hingegen gewinnt mit der langhubigen Auslegung an Spülfläche durch größere Kanalfester hinzu. Darüber hinaus bewirkt die zusätzliche Frischgasspülung über den Auslasskanal eine erhebliche Vergrößerung der Winkelquerschnitte auf der Spülseite, einhergehend mit einer vorteilhaften Frischluftkühlung des auslassseitigen Kolbenbereichs. Wie allgemein bekannt, richten sich die Steuerzeiten für den Gaswechsel am Zweitaktmotor zum einen nach den notwendigen Zeitquerschnitten der Spülfenster und nach dem erforderlichen Vorauslass zur Entspannung des Restgases im Zylinder. Die Erhöhung der Zeitquerschnitte für die Spülung mittels des transformierten Auslasskanals trägt somit zu einer Verkürzung der Steuerzeiten für Spülung und entsprechend Gesamtauslassvorgang bei, ohne dass der Vorauslass verringert wird. Die den Wirkungsgrad steigernden Nutzhübe im Expansions- als auch Verdichtungshub erhöhen sich somit.

Weitere vorteilhafte konstruktive Ausführungen in Kombination mit der Erfindung können sein:
- Um hohe thermodynamische Innenwirkungsgrade bei stark variierenden Füllungsgraden im Zylinder zu realisieren, sind variable geometrische Verdichtungsverhältnisse vorteilhaft. Dies gilt insbesondere für aufgeladene Ottomotoren, die unter Hochlast das Verdichtungsverhältnis zur Vermeidung von klopfender Verbrennung drastisch reduzieren müssen. Da am schlitzgesteuerten Zweitaktmotor im Zylinderkopf keinerlei Ventiltrieb existiert, lässt sich ein variables Verdichtungsverhältnis besonders einfach durch axiales Verschieben (bezogen auf die Zylinderachse) des Zylinderkopfes bzw. Brennraumeinsatzes umsetzen. Die axiale Positionierung des Zylinderkopfs kann mechanisch beispielsweise durch Gewindeführung oder Exzenterwelle, aber auch hydraulisch durch einen Hydraulikstempel erfolgen. Die Abdichtung des verschiebbaren Zylinderkopfes / Brennraumeinsatzes zur Zylinderwand kann vorzugsweise über selbstschmierende (Kohlenstoff-) Kolbenringe ausgeführt werden, da die Verstellwege nur wenige Millimeter betragen bzw. die Gleitgeschwindigkeiten sich im Bereich von cm/s bewegen.
- Die Brennraumgeometrie des modernen Zweitaktmotors zeigt meist eine symmetrische eingeschnürte Kugelkalotte mit zentraler Zündkerze und umlaufendem Quetschringspalt. Diese Brennraumgestaltung der Zweitaktmotoren ermöglicht gegenüber den dachförmigen Brennräumen an vierventiligen Viertaktmotoren erheblichen höhere Brenngeschwindigkeiten und somit geringeren Vorzündungsbedarf und Klopfneigung. Eine besonders vorteilhafte Brennraumgestaltung im Hinblick auf hohe Brenngeschwindigkeiten und Klopffestigkeit in Verbindung mit dem Auslasskanal-Frischgasspülverfahren und wahlweise variabler Verdichtung, wird in der Kombination mit einer s.g. Vorkammerzündkerze und einem eingeschnürten Kugelkalotten- bzw. Omega förmigen Arbeitsraum gesehen, der sich vornehmlich im Zylinderkopf befindet. Der Kolbenboden bleibt dabei flach, bzw. nur leicht gewölbt. Die hohe thermische Belastung eines Omega-Arbeitsraums findet somit nicht im Kolbenbereich (ähnlich Dieselmotor), sondern in dem weitaus besser kühlfähigen Zylinderkopf statt. Für ein variables Verdichtungsverhältnis ist es vorteilhaft, ausschließlich den zentrischen Teil des Zylinderkopf seitigen Brennraums (Kugel- bzw.Omegakalotte) verschiebbar zu gestalten und den äußeren Ringspalt starr zu belassen, weil sich somit die Turbulenz erzeugende Quetschspalthöhe nicht negativ vergrößert. Der verschiebbare Teil des zylinderkopfseitigen Brennraums wäre somit im Durchmesser kleiner als die Zylinderbohrung.
- Die Trennung des Schmierverfahrens von Kurbeltrieb und Kreuzkopfpleuelführung über eine geschlossene Umlaufschmierung einerseits und die Zylinder / Kolbenschmierung andererseits kann durch zwei unterschiedliche Ausführungsweisen erfolgen. Zum einen ist für die Ölschmierung der Zylinderlauffläche eine konventionelle Mischungsschmierung durch Kraftstoff-Öl-Gemische möglich, was jedoch relativ hohe Ölanteile bedingt. Günstiger hinsichtlich des relativen Ölverbrauchs erweist sich die klassische Getrenntschmierung, die über eine separate Dosierpumpe Öl unmittelbar an die zu schmierenden Komponenten (hier die Zylinderlaufbahn) über Ölleitungen liefert. Einen tribologisch vollkommen anderen Weg eröffnet die Möglichkeit eines gekapselten ölgeschmierten Kurbeltriebs, indem die Zylinderlaufbahn über Trockenschmierstoffe und damit "öllos" geschmiert wird. Aus der Literatur sind Versuche mit Kohlenstoffkolben und ebensolchen Kolbenringen bekannt, die in Metall- oder auch Keramikzylinderlaufflächen eingesetzt wurden. Der hierzu eingesetzte Schmierstoff basiert vornehmlich auf Graphit, d.h. reiner Kohlenstoff. Graphit besitzt den Vorteil, bis zu 400°C oxidationsstabil zu verbleiben, Öl hingegen beginnt von etwa 200°C an zu oxidieren. Im Expansionshub von Kolbenmotoren erreichen die Flammfronten auch die Zylinderlaufbahn, wodurch generell Schmieröl von der Zylinderlaufbahn abdampft und zumindest teilweise (CO-Emissionen) verbrennt. Dieses unvermeidbare Phänomen trägt sowohl zur Schadstofferhöhung als auch zu einem erhöhten Ölverbrauch eines Kolbenmotors bei. Blickt man auf zukünftige Kraftstoffe, wie beispielsweise Wasserstoff, so tritt der Effekt des Ölabbrennens von der Zylinderlaufbahn sogar verstärkt auf, da die Wasserstofflamme wegen ihrer geringen Zündtemperatur bis an die Zylinderwand brennt und die Flamme direkt den Schmierfilm tangiert. Bei Benzin bzw. Alkohol basierten Ottokraftstoffen erlischt die Flammenfront in der Verbrennungsphase spätestens einige hundertstel Millimeter vor der Zylinderwand und trägt somit zu einem verminderten Ölabbrand bei. Die hier beschriebene tribologische Trennung von Kurbeltriebölschmierung und Kohlenstoff basierter Feststoffschmierung für den Zylinderbereich ermöglicht somit einen "ölfreien" Verbrennungsmotor im Bereich des Arbeitszylinders, womit sich eine vollkommene Eliminierung von Schadstoffen ergibt, die aus Ölverbrauch und Ölabbrand entstehen. In Verbindung mit Wasserstoff als Kraftstoff wäre somit rein konstruktiv eine Motorbasis gegeben, die keine HC- und kaum CO-Emissionen erzeugt. Darüber hinaus trägt die gänzliche Kontaktvermeidung von Schmieröl mit der heißen Zylinderlaufbahn / Verbrennungsflamme zur Lebensdauererhöhung des Schmieröls bei, da dessen Arbeitstemperatur auf niedrigerem Niveau liegt und keine Versauerung durch in das Öl eingebrachte Verbrennungsresiduen stattfindet.
- Die Kreuzkopfausführung des Kurbeltriebs ermöglicht eine gekapselte Ölzwangskühlung des Kolbens mittels Drucköl aus dem Kreuzkopflager durch die ölführende Kolbenstange zur thermisch hoch belasteten Kolbenkrone und Kolbenringbereich. Der Rücklauf des Kühlöls erfolgt ebenfalls durch die Kolbenstange, so daß kein Öl unterhalb des Kolbenbodens austritt, sondern dieses ausschließlich in den Kurbelkastenraum zurückfließt. Der Kolben selbst kann mehrteilig gebaut werden, u.a. auch aus unterschiedlichen Werkstoffen, wie Kohlenstoff für Kolbenhemd und Kolbenringe, bzw. Aluminium oder Stahl für die Kolbenkrone / Kolbenboden.

Die mit der Erfindung erzielten Vorteile bestehen insbesondere darin, dass durch die vorgesehene verfahrenstechnische Nutzung des Auslasskanals, bei der dieser zum zeitlichen Ende des Ladungswechsels als abgasführender Kanal vorzeitig stillgelegt und stattdessen in einen zusätzlichen Spülkanal für Frischgas umgewandelt wird, Spülverluste aufgrund von sich im Auslasskanal befindenden Frischgasresten in den Zylinder mittels vorkomprimierter Frischluft zurückgeschoben und für die anstehende Verbrennung nutzbar gemacht werden können. Damit ist eine drastische Reduktion der Abgasemissionen, insbesondere in Folge von nicht verbranntem Kraftstoff, erreichbar. Selbst bei Vergaser-betriebenen, Kurbelkasten-gespülten Zweitaktmotoren lässt sich mit diesem Rückspülverfahren eine verbrennungstechnisch vorteilhafte Schichtladung im Zylinder am Ende des Ladungswechsels erzeugen, die in Zündkerzennähe hohe Kraftstoffanteile und im Kolbenbodenbereich durch die Rückspülung mit Frischluft eher kraftstoffarme Zonen aufweist. Im Kern wird der Ladungswechsel dabei über symmetrische Steuerzeiten des Schlitz gesteuerten Zweitaktmotors grundlegend in einen geänderten Spülablauf mit nicht-symmetrischen Steuerzeiten überführt.

Durch die Kombination des Zweitaktmotors mit der Abgasladepumpe, die eingangsseitig mit Abgasimpuls aus dem Zylinder beaufschlagt wird und ausgangsseitig durch die Nutzung der Abgasenergie komprimiertes Frischgas bereitstellt, kann zudem ein besonders hoher Motorwirkungsgrad erreicht werden. Durch die genannten konstruktiven Neuerungen können insgesamt gesehen Ladungswechsel, Verbrennung und Expansionsphase des Zweitaktmotors maßgeblich positiv beeinflusst werden, um einen hocheffizienten, emissionsarmen aber auch kostengünstigen Kolbenmotor für zukünftige Anwendungen, insbesondere auch im Hinblick auf Range-Extender-Antriebe und Hybridfahrzeuge, darzustellen. Dadurch werden insbesondere die bekannten Vorteile des Zweitaktmotors gegenüber Viertaktmotoren, wie geringer Bauraumbedarf, hohe Leistungsdichte, geringe Reibungsverluste, gute Drehmomentgleichförmigkeit bei geringer Zylinderzahl und dergleichen, selbst im Hinblick auf vergleichsweise strenge Abgas- und Emissionsvorschriften wieder für ein breites Anwendungsspektrum nutzbar gemacht.

Ein Ausführungsbeispiel der Erfindung wird anhand einer Zeichnung näher erläutert. Darin zeigen:
- Fig. 1: schematisch einen Zweitakt-Verbrennungsmotor nach dem Stand der Technik,
- Fig. 2: das Steuerdiagramm des Motors nach Fig. 1,
- Fig. 3: schematisch einen alternativen, erfindungsgemäßen Zweitakt-Verbrennungsmotor,
- Fig. 4: schematisch den Zweitakt-Verbrennungsmotor nach Fig. 3 während des Auslasstakts in einer frühen, ersten Phase,
- Fig. 5: schematisch den Zweitakt-Verbrennungsmotor nach Fig. 3 während des Auslasstakts in einer zweiten Phase,
- Fig. 6: schematisch den Zweitakt-Verbrennungsmotor nach Fig. 3 während des Auslasstakts in einer dritten oder End-Phase, und
- Fig. 7: das Steuerdiagramm des Motors nach Fig. 3.

Gleiche Teile sind in allen Figuren mit denselben Bezugszeichen versehen.

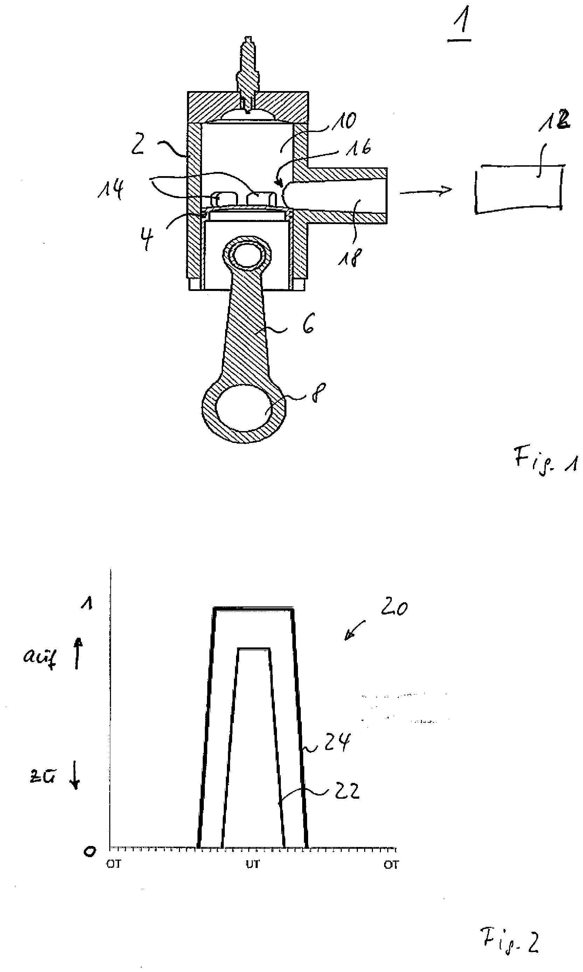

Der in Fig. 1 schematisch dargestellte Verbrennungsmotor 1 ist in herkömmlicher Bauweise nach dem Stand der Technik als Zweitaktmotor ausgelegt. Er umfasst eine Anzahl von Zylindern 2, von denen in Fig. 1 lediglich einer dargestellt ist, und in denen jeweils ein Arbeitskolben 4 geführt ist. Der Arbeitskolben 4 wirkt über ein Pleuel 6 auf eine Kurbelwelle 8. Je nach Auslegung und Bauart des Verbrennungsmotors 1 können dabei auch der oder die Arbeitskolben 4 mehrerer oder aller Zylinder 2 auf eine gemeinsame Kurbelwelle 8 wirken.

Innerhalb des Zylinders 2 befindet sich in herkömmlicher Bauweise der Arbeitsraum 10, in dem im Arbeitstakt des Zylinders 2 ein komprimiertes Brennstoff-Luft-Gemisch zur Verbrennung gebracht wird. In Reaktion hierauf führt der im Zylinder 2 verschiebbar angeordnete Arbeitskolben 4 einen Arbeitshub aus, wobei er die Kurbelwelle 8 arbeitsleistend antreibt. Nach der Vollendung des Arbeitshubs, also nach Expansion des verbrannten Arbeitsgases im Zylinder 2 und dem Erreichen des so genannten "Auslass Öffnens", wird das verbrannte Arbeitsgas als Abgas während eines Auslasstakts des Zylinders 2 einer auslassseitig an diesen angeschlossenen Auspuffanlage 12 zugeführt.

Für die zum Betrieb des Zylinders 2 erforderlichen Gaswechsel ist der Arbeitsraum 10 gaseinlassseitig über eine Anzahl von in den Arbeitsraum 10 mündenden Gas-Einlassfenstern 14 mit den Einlass-Überströmkanälen und auslassseitig über einen mit dem (oder, bei mehreren, den) in den Arbeitsraum 10 mündenden Gas-Auslassfenster(n) 16 verbundenen Auslasskanal 18 bzw. ein Auslasskanal-System mit der Auspuffanlage 12 verbunden. Die Steuerung der Gaswechsel im Arbeitsraum 10 erfolgt dabei in der Art einer herkömmlichen Ausführung eines Zweitaktmotors durch die Auf- und Abwärtsbewegung des Arbeitskolbens 4 im Zylinder, wodurch die Gas-Einlassfenster 14 und das Gas-Auslassfenster 16 jeweils geeignet geöffnet oder geschlossen werden. Bei einer konventionellen schlitzgesteuerten Spülung im Zweitaktmotor öffnet dabei im Expansionshub zuerst das Gas-Auslassfenster 16 und damit der Auslass, um den Zylinderinnendruck durch ausströmendes Abgas zu entspannen (notwendiger Vorauslass). Nachfolgend öffnen die Gas-Einlassfenster 14 und damit der bzw. die Überströmkanäle, die Frischgas aus dem Kurbelgehäuse (oder auch Lader) in den Zylinder 2 einlassen. Die Form der Zylinderausspülung (Umkehr-, Gleichstromspülung, etc.) ist unerheblich, da in allen Verfahren angestrebt wird, im Zylinder 2 befindliches Abgas durch das einströmende Frischgas aus dem Zylinder 2 mit möglichst geringer Durchmischung beider Gasphasen auszuschieben.

Der Ablauf der einzelnen Verfahrensschritte beim Gaswechsel kann in an sich üblicherweise anhand eines so genannten Steuerdiagramms 20 dargestellt werden, wie es für den Verbrennungsmotor 1 in Fig. 2 beispielhaft und schematisch gezeigt ist. In einem solchen Steuerdiagramm 20 ist auf der X-Achse als Maß für die Zeit während einer vollständigen Kurbelwellenumdrehung die Winkelstellung der Kurbelwelle 8 in der Einheit °KW (= "Grad Kurbelwelle) zwischen dem Oberen Totpunkt ("OT") über den unteren Totpunkt ("UT") hinweg bis wieder zum Oberen Totpunkt abgetragen; die Spanne zwischen OT und nächstem OT beträgt somit 360°KW. Auf der y-Achse ist hingegen der Öffnungsgrad der jeweiligen Steuereinheit abgetragen, zwischen "0" (für vollständig geschlossen) und "1" (für vollständig geöffnet). Im Steuerdiagramm 20 nach Fig. 2 sind die Steuerzeiten des Verbrennungsmotors 1 für den Öffnungsgrad der Gas-Einlassfenster 14 und damit den Gaseinlass (Linie 22) sowie für das Gas-Auslassfenster 16 und damit den Gasauslass (Linie 24) gezeigt, die sich aus dem Überdeckungsgrad durch den Arbeitskolben 4 ergeben. Im dargestellten Beispiel liegt die Steuerzeit des schlitzgesteuerten Zweitaktmotors 1 im Auslassbereich zwischen 120-190°KW (KW=Kurbelwelle) und im Bereich des (Frischgas)-Überströmens zwischen 90-140°KW. Hieraus ergeben sich Steuerlängen für den Vorauslass von ca. 15-35°KW. Die großen Steuerlängen beziehen sich vornehmlich auf hochdrehende Motoren, wo hingegen die kurzen Steuerzeiten auf niedrige Betriebsdrehzahlen ausgelegt sind.

Bauartbedingt bleibt bei einem solchen schlitzgesteuerten Zweitakt-Verbrennungsmotor 1 üblicherweise der Auslass länger geöffnet als die Einlass-Überströmkanäle. In dieser zeitlichen Phase gegen Ende des Ladungswechsels entstehen vornehmlich die unerwünschten hohen Anteile der Frischgasspülverluste, die nachfolgend in den Auslasskanal 18 und von diesem in die Abgasanlage 12 gelangen.

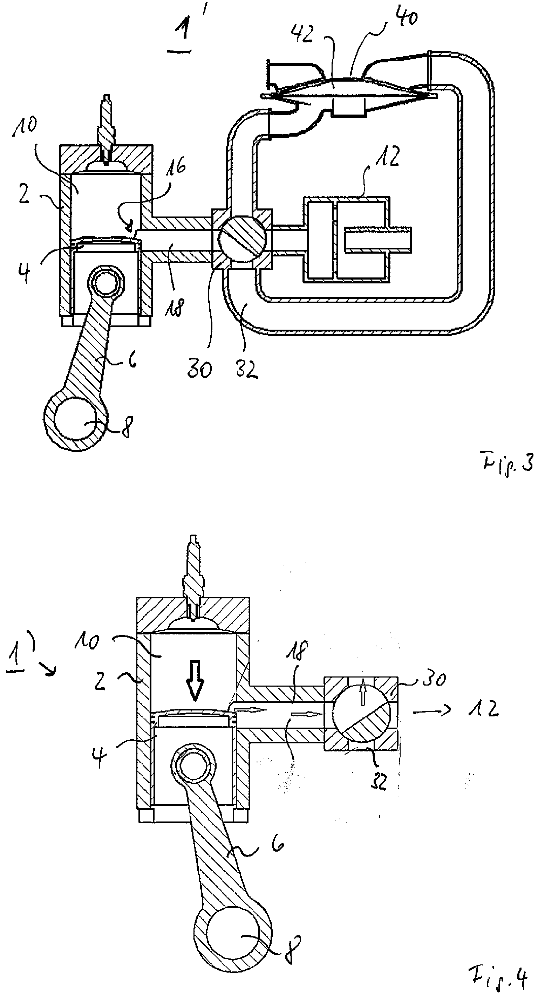

Ein modifizierter, erfindungsgemäßer Zweitakt-Verbrennungsmotor 1', der dieses Problem überwindet, ist in Fig. 3 gezeigt. Der Zweitakt-Verbrennungsmotor 1' weist dazu ein im Auslasskanal 18 angeordnetes schaltbares Mehrwege-Umschaltventil 30 auf, über das das Gas-Auslassfenster 16 sowohl mit der Auspuffanlage 12 als auch mit einer Frischgas-Überdruckleitung 32 verbunden ist. Über das Mehrwege-Umschaltventil 30 ist alternativ eine gasseitige Verbindung zwischen dem Gas-Auslassfenster 16 und der Auspuffanlage 12 oder zwischen dem Gas-Auslassfenster 16 und der Frischgas-Überdruckleitung 32 herstellbar.

Gegen Ende des Ladungswechsels, wenn die Gas-Einlassfenster 14 bereits geschlossen sind, sperrt das Mehrwege-Umschaltventil 30 den Gasfluss aus dem Zylinder 2 in Richtung zur Abgasanlage 12 ab. Gleichzeitig wird durch das Mehrwege-Umschaltventil 30 mit dem Verschließen des Auslasskanals 18 zur Abgasanlage 12 die Frischgas-Überdruckleitung 32 zum Auslasskanal 18 am Zylinder 2 hin geöffnet. Diese Ventilposition ist in Fig. 3 gezeigt. In dieser Ventilstellung wird vorverdichtetes Frischgas, vorzugweise reine vorverdichtete Luft, in den Auslasskanal 18 gepresst. Dieses Frischgas schiebt die im Auslasskanal 18 vorhandene Gasmasse, d.h. das Abgas mit den enthaltenen Frischgasspülverlusten inkl. Kraftstoff, in den Zylinder 2 zurück und sorgt gleichzeitig für eine Nach- oder Aufladung im Zylinder 2 am Ende des Ladungswechsels.

Hinsichtlich der Dimensionierung der Komponenten ist bevorzugt die Steuerzeitenvorauslegung der Kanalfenster im Zylinder und die Gesamtauslegung des Zweitakt-Verbrennungsmotors 1' berücksichtigt. Kleinere Kanalvolumina unterstützen hohe spezifische Motorleistungen, größere Volumina die Reduzierung von Spülverlusten. Das Volumen des Teilstücks des Auslasskanals 18, welches sich zwischen dem Gas-Auslassfenster 16 des Zylinders 2 und dem Mehrwege-Umschaltventil 30 befindet, soll bevorzugt mindestens 10% und/oder höchstens 180% des geometrischen Hubvolumens des Zylinders 2 betragen.

Das Mehrwege-Umschaltventil 30 kann allgemein als Vorrichtung mit oszillierenden und/oder rotierenden Ventilen zur Steuerung des Gaswechsels im Auslasskanal 18 ausgelegt sein. Im Ausführungsbeispiel ist es als Walzenventil, insbesondere als zylindrisches, axial drehbares Drehventil in einem fest stehenden Steuergehäuse, ausgeführt. Es ist im Ausführungsbeispiel mit Steuerausschnitten versehen, die mit Kanalfenstern im Steuergehäuse korrespondieren. Das Drehventil rotiert dabei synchron mit der Kurbelwellendrehzahl des Motors, wobei es von diesem mittelbar über Zwischenelemente, wie Zahnriemen, Kette, Zahnräder angetrieben werden kann, aber auch unmittelbar, indem das Drehventil direkt auf der Kurbelwelle montiert ist, bzw. einen Teil der Kurbelwelle darstellt. Der Antrieb des (separaten) Drehventils kann alternativ aber auch elektrisch erfolgen und somit mechanisch vom Kurbeltrieb getrennt ausgeführt sein. Eine Phasenverstellung zwischen Drehventil und Kurbelwellenposition kann ebenfalls vorgesehen werden, um den durch die Ventilvorrichtung beeinflussbaren Ladungswechsel über variable Phasenlage, insbesondere den Zeitpunkt des Frischluftspülens über den Auslasskanal betreffend, an Last und Drehzahl des Motors anzupassen. Auch können einzelne Steuerausschnitte im Steuergehäuse hinsichtlich Strömungsquerschnitt und Phasenlage individuell variabel gestaltet werden.

Die Abdichtung des Drehventils zum Steuergehäuse kann vorzugsweise über einen engen Spalt realisiert sein, der den Vorteil geringster Reibung mit sich bringt. Eine Kühlung des Drehventils ist mit Flüssigkeit, aber auch mit Luft möglich, wobei das Drehventil selbst als Hohlkörper ausgeführt sein kann, durch dessen inneren Bereich axial Kühlmedium strömt und das Drehventil selbst als Förderpumpe ausgebildet ist. Die Lagerung eines separaten Drehventils ist vorzugsweise über Wälzlager ausgeführt.

In der in Fig. 3 gezeigten Ausführungsform ist die Frischgas-Überdruckleitung 32 in als eigenständig erfinderisch angesehener Ausgestaltung ihrerseits eingangsseitig mit der Sekundärseite einer abgasbetriebenen Aufladevorrichtung 40 verbunden, die somit eine Kompressor-Einheit für die Frischgas-Überdruckleitung 32 bildet. Die abgasbetriebene Aufladevorrichtung 40 ist dabei im Ausführungsbeispiel in ebenfalls als eigenständig erfinderisch angesehener Ausgestaltung als Abgasladepumpe ausgeführt, wie sie beispielsweise aus der EP 2 846 019 A1, aus der EP 2 846 020 A1, aus der EP 3 061 970 A1 oder aus der EP 3 282 109 A1 bekannt ist. Dazu umfasst sie eine Membranpumpe 42, die sekundärseitig über die Frischgas-Überdruckleitung 32 mit dem Mehrwege-Umschaltventil 30 und primärseitig mit dem Auslasskanal 18 verbunden ist.

Dazu ist das Mehrwege-Umschaltventil 30 als Drei-Wege-Ventil ausgeführt, über das bedarfsweise eine gasseitige Verbindung zwischen dem Gas-Auslassfenster 16 und der Primärseite der Membranpumpe 42 herstellbar ist.

Zur Verdeutlichung der Arbeitsweise der genannten Komponenten ist der Zweitakt-Verbrennungsmotor 1' gem. Fig. 3 in den Figs. 4 bis 6 zu verschiedenen Zeitpunkten während des Auslasstakts gezeigt.

Fig. 4 zeigt den Zweitakt-Verbrennungsmotor 1' während des Auslasstakts in einer frühen, ersten Phase, die zur Abgasaufladung dient. In dieser ersten Phase der Abgasaufladung beim Öffnen des Gas-Auslassfensters 16 ist mittels der Ventilstellung des Mehrwege-Umschaltventils 30 die Kanalverbindung zur Abgasanlage 12 hin noch vollständig verschlossen, und das Abgas wird über die Ventilvorrichtung ausschließlich der Primärseite der Membranpumpe 42 der Abgasladepumpe zugeführt, um sich dort über die Umwandlung der kinetischen Abgasenergie zu entspannen. Diese erste Phase des Ladungswechsels entspricht in Funktion und vom zeitlichen Ablauf etwa dem "Vorauslass" eines konventionellen schlitzgesteuerten Zweittaktmotors. Die Steuerzeit, in der der Auslasskanal 18 beim seinem Öffnen über die Kolbenkante ausschließlich mit der Abgasladepumpe in Verbindung steht (Abgasaufladung), beträgt bevorzugt zwischen etwa 10-50°KW.

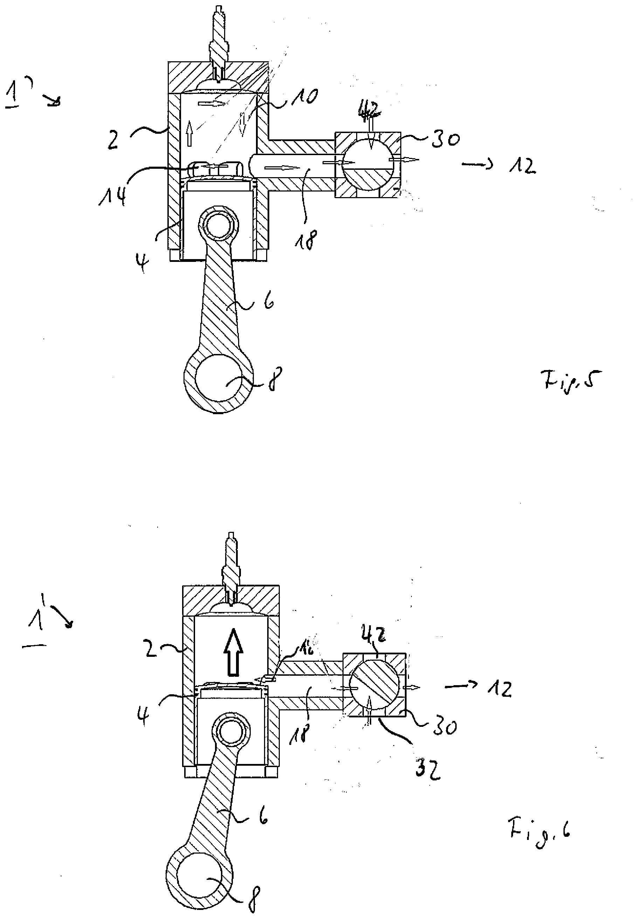

In der nachfolgenden zweiten Phase, entsprechend der Arbeitsposition des Zweitakt-Verbrennungsmotors 1' gem. Fig. 5, öffnen zum einen die Gas-Einlassfenster 14 und damit die Überströmkanäle im Zylinder 2, und darüber hinaus gibt das Mehrwege-Umschaltventil 30 den Strömungsweg vom Auslasskanal 18 zur Abgasanlage 12 frei und ebenso den Strömungsweg des entspannten rückläufigen Abgasmassenstroms aus der Membranpumpe 42 der Abgasladepumpe zur Abgasanlage 12. In dieser Phase ist die Primärseite der Abgasladepumpe vorzugsweise dauerhaft mit der Abgasanlage 12 strömungsdurchgängig verbunden, um eine möglichst lang andauernde zeitliche Entspannung des Abgases in der Abgasladepumpe zu ermöglichen. Dies entspricht der für die Abgasladepumpe grundsätzlich vorgesehenen Betriebsweise.

In Fig. 6 ist der Zweitakt-Verbrennungsmotor 1' einer dritten oder auch Endphase des Ladungswechsels, auch entsprechend der Situation in Fig. 3, gezeigt. In dieser Endphase, wenn das Gas-Auslassfenster 14 im Zylinder 2 durch den aufwärts gehenden Arbeitskolben 4 sich zu schließen beginnt, schließt das Mehrwege-Umschaltventil 30 sowohl die Strömungswege zwischen Auslasskanal 18 und Abgasanlage 12 als auch die zwischen Auslasskanal 18 und der Membranpumpe 42 der Abgasladepumpe. Ergänzend hierzu wird über das Mehrwege-Umschaltventil 30 ein Strömungsweg freigegeben, der den Auslasskanal 18 nun mit der Frischgas-Überdruckleitung 32 und damit mit der Sekundär- oder Frischluftseite der Abgasladepumpe verbindet. Dadurch wird komprimiertes oder unter Überdruck stehendes Frischgas in den Auslasskanal 18 geschoben, das wiederum die im Auslasskanal 18 befindlichen Gasanteile, vornehmlich die Spülverluste aus dem Zylinder 2, in diesen zurückschiebt und zudem eine Frischgasnachladung oder Aufladung im Zylinder 2 bewirkt.

Letztendlich wird dann das Gas-Auslassfenster 16 durch den aufwärts gehenden Arbeitskolben 4 verschlossen, so dass der Ladungswechsel beendet ist. Selbstverständlich können mehrere Zylinder 2 über eine oder mehrere solcher Ventilvorrichtungen von einer Abgasladepumpe versorgt werden.

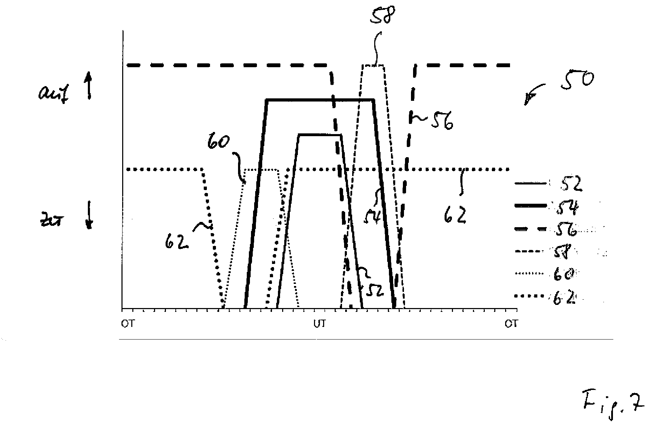

Das Steuerdiagramm 50 des Zweitakt-Verbrennungsmotors 1' gem. Fig. 3 ist in Fig. 7 schematisch gezeigt. Darin sind die Steuerzeiten des Verbrennungsmotors 1' für den Öffnungsgrad der Gas-Einlassfenster 14 und damit den Gaseinlass (Linie 52), für das Gas-Auslassfenster 16 und damit den Gasauslass (Linie 54), für die Verbindung des Auslasskanals 18 mit der Abgasanlage 12 (Linie 56), für die Verbindung des Auslasskanals 18 mit der Frischgas-Überdruckleitung 32 (Linie 58), für die Verbindung der Primärseite der Abgasladepumpe 42 mit dem Auslasskanal 18 während des Abgasdruckwelleneinlaufs in die Abgasladepumpe 42 (Linie 60) und für die Verbindung der Primärseite der Abgasladepumpe 42 mit der Abgasanlage 12 (Linie 62) gezeigt.

### Bezugszeichenliste

- 1,: 1'Zweitakt-Verbrennungsmotor
- 2: Zylinder
- 4: Arbeitskolben
- 6: Pleuel
- 8: Kurbelwelle
- 10: Arbeitsraum
- 12: Auspuffanlage
- 14: Gas-Einlassfenster
- 16: Gas-Auslassfenster
- 18: Auslasskanal
- 20: Steuerdiagramm
- 22: Linie
- 24: Linie
- 30: Mehrwege-Umschaltventil
- 32: Frischgas-Überdruckleitung
- 40: Abgasbetriebene Aufladevorrichtung
- 42: Membranpumpe
- 50: Steuerdiagramm
- 52: Linie
- 54: Linie
- 56: Linie
- 58: Linie
- 60: Linie
- 62: Linie

## Patentansprüche

1. Verfahren zum Betreiben eines Zweitakt-Verbrennungsmotors (1') mit einer Anzahl von Zylindern (2), in denen jeweils ein Arbeitskolben (4) geführt ist, und in denen sich unter Druck stehendes Arbeitsgas arbeitsleistend entspannen kann, wobei der oder jeder Zylinder (2) jeweils ein oder mehrere Gas-Auslassfenster (16) aufweist, die jeweils über einen Auslasskanal (18) mit einer Auspuffanlage (12) verbunden sind, wobei in einer Endphase des Auslasstakts des jeweiligen Zylinders (2) die gasseitige Verbindung zwischen allen Gas-Auslassfenstern (16) des jeweiligen Zylinders (2) und der Auspuffanlage (12) unterbrochen und stattdessen alle Gas-Auslassfenster (16) des jeweiligen Zylinders (2) über den Auslasskanal (18) mit unter Überdruck stehendem Frischgas beaufschlagt werden.

2. Verfahren nach Anspruch 1, bei dem durch die Zuführung des unter Überdruck stehenden Frischgases in den Zylinder (2) eine Aufladung und/oder Ladungsdichtesteigerung des im Zylinder (2) befindlichen Gasvolumens erzeugt wird.

3. Verfahren nach Anspruch 1 oder 2, bei dem die in der Endphase des Auslasstakts vorgesehene Umschaltung der gasseitigen Verbindung zu einem Startzeitpunkt innerhalb des Auslasstakts nach dem unteren Totpunkt der Kolbenstellung im Zylinder (2) und vor dem Schließen von jeweils mit einem Einlass-Überströmkanal verbundenen Gas-Einlassfenstern (14) des jeweiligen Zylinders (2) vorgenommen wird.

4. Verfahren nach einem der Ansprüche 1 bis 3, bei dem die Umschaltung der gasseitigen Verbindung innerhalb des Auslasstakts mit Schließen der Gas-Auslassfenster (16) durch den im Zylinder (2) laufenden Kolben (4) beendet wird.

5. Verfahren nach einem der Ansprüche 1 bis 4, bei dem während des Auslasstakts das aus dem Zylinder (2) abströmende Abgas in einer ersten Taktphase des Auslasstakts ganz oder teilweise der Primärseite einer Abgasladepumpe (40) zugeführt und dort arbeitsleistend weiter entspannt wird, bevor in einer zweiten Taktphase des Auslasstakts das in der Primärseite der Abgasladepumpe (40) befindliche, nachentspannte Abgas gemeinsam mit sich ggf. noch im Zylinder (2) befindlichem Abgas zur Auspuffanlage (12) geleitet wird.

6. Verfahren nach Anspruch 5, bei dem die in der Abgasladepumpe (40) auf der Primärseite in Expansionsarbeit umgewandelte Energie des Abgases ganz oder teilweise auf der Sekundärseite in Kompressionsarbeit des zur Einspeisung in den Auslasskanal (18) vorgesehenen Frischgases umgewandelt wird.

7. Zweitakt-Verbrennungsmotor (1') mit einer Anzahl von Zylindern, in denen jeweils ein Arbeitskolben (4) geführt ist, und in denen sich unter Druck stehendes Arbeitsgas arbeitsleistend entspannen kann, wobei der oder jeder Zylinder (2) jeweils ein oder mehrere Gas-Auslassfenster (16) aufweist, die jeweils über einen Auslasskanal (18) mit einer Auspuffanlage (12) verbunden sind, **gekennzeichnet durch** ein im Auslasskanal (18) angeordnetes schaltbares Mehrwege-Umschaltventil (30), über das alle Gas-Auslassfenster (16) des jeweiligen Zylinders (2) sowohl mit der Auspuffanlage (12) als auch mit einer Frischgas-Überdruckleitung (32) verbunden sind.

8. Zweitakt-Verbrennungsmotor (1') nach Anspruch 7, bei dem über das Mehrwege-Umschaltventil (30) alternativ eine gasseitige Verbindung zwischen den Gas-Auslassfenstern (16) und der Auspuffanlage (12) oder zwischen den Gas-Auslassfenstern (16) und der Frischgas-Überdruckleitung (32) herstellbar ist.

9. Zweitakt-Verbrennungsmotor (1') nach Anspruch 7 oder 8, bei dem das Volumen des Auslasskanals (18) zwischen dem jeweiligen Gas-Auslassfenster (16) des jeweiligen Zylinders (2) und dem Mehrwege-Umschaltventil (30) mindestens 10% und/oder höchstens 180% des geometrischen Hubvolumens des jeweiligen Zylinders (2) beträgt.

10. Zweitakt-Verbrennungsmotor (1') nach einem der Ansprüche 7 bis 9, dessen Mehrwege-Umschaltventil (30) als Walzenventil ausgeführt ist.

11. Zweitakt-Verbrennungsmotor (1') nach einem der Ansprüche 7 bis 10, dessen Frischgas-Überdruckleitung (32) eingangsseitig mit einer Kompressor-Einheit verbunden ist.

12. Zweitakt-Verbrennungsmotor (1') nach Anspruch 11, dessen Kompressoreinheit als mechanisch oder elektrisch angetriebener Verdichter ausgeführt ist.

13. Zweitakt-Verbrennungsmotor (1') nach Anspruch 11, dessen Kompressoreinheit durch eine abgasbetriebene Aufladevorrichtung (40) gebildet ist.

14. Zweitakt-Verbrennungsmotor (1') nach Anspruch 13, dessen abgasbetriebene Aufladevorrichtung (40) als Membranpumpe (42) ausgeführt ist, die sekundärseitig über die Frischgas-Überdruckleitung (32) mit dem Mehrwege-Umschaltventil (30) und primärseitig mit dem Auslasskanal (18) verbunden ist.

15. Zweitakt-Verbrennungsmotor (1') nach einem der Ansprüche 7 bis 14, dessen Mehrwege-Umschaltventil (30) als Drei-Wege-Ventil ausgeführt ist, über das bedarfsweise eine gasseitige Verbindung zwischen dem Gas-Auslassfenster (16) und der Primärseite der Kompressoreinheit herstellbar ist.

## Claims

1. Method for operating a two-stroke internal combustion engine (1') having a number of cylinders (2), in which a working piston (4) is respectively guided, and in which pressurized working gas can expand to perform work, wherein the or each cylinder (2) respectively has one or more gas exhaust windows (16), which are respectively connected to an exhaust system (12) via an exhaust channel (18), wherein in a final phase of the exhaust stroke of the respective cylinder (2), the gas-side connection between all gas exhaust windows (16) of the respective cylinder (2) and the exhaust system (12) is interrupted and instead all gas exhaust windows (16) of the respective cylinder (2) are supplied with fresh gas under pressure via the exhaust channel (18).

2. Method according to Claim 1, in which the supply of the fresh gas under pressure to the cylinder (2) produces charging and/or a charge density increase of the gas volume present in the cylinder (2).

3. Method according to Claim 1 or 2, in which the changeover of the gas-side connection provided in the final phase of the exhaust stroke is carried out at a start time within the exhaust stroke after the bottom dead centre of the piston position in the cylinder (2) and before the closing of gas inlet windows (14) of the respective cylinder (2), each of which is connected to an inlet overflow channel.

4. Method according to one of Claims 1 to 3, in which the changeover of the gas-side connection within the exhaust stroke is terminated when the gas exhaust windows (16) are closed by the piston (4) running in the cylinder (2).

5. Method according to one of Claims 1 to 4, in which, during the exhaust stroke, the exhaust gas flowing out of the cylinder (2) is supplied in whole or in part to the primary side of an exhaust gas charging pump (40) in a first stroke phase of the exhaust stroke and expanded there further to perform work before, in a second stroke phase of the exhaust stroke, the re-expanded exhaust gas present in the primary side of the exhaust gas charging pump (40) is guided together with any exhaust gas still present in the cylinder (2) to the exhaust system (12).

6. Method according to Claim 5, in which the energy of the exhaust gas converted into expansion work on the primary side in the exhaust gas charging pump (40) is converted in whole or in part on the secondary side into compression work of the fresh gas provided for injection into the exhaust channel (18).

7. Two-stroke internal combustion engine (1') having a number of cylinders, in which a working piston (4) is respectively guided, and in which pressurized working gas can expand to perform work, wherein the or each cylinder (2) respectively has one or more gas exhaust windows (16), which are respectively connected to an exhaust system (12) via an exhaust channel (18)
**characterized by**
a switchable multi-port switching valve (30) arranged in the exhaust channel (18), via which all gas exhaust windows (16) of the respective cylinder (2) are connected both to the exhaust system (12) and a fresh gas overpressure line (32).

8. Two-stroke internal combustion engine (1') according to Claim 7, in which a gas-side connection between the gas exhaust windows (16) and the exhaust system (12) or between the gas exhaust windows (16) and the fresh gas overpressure line (32) can alternatively be established via the multi-port switching valve (30).

9. Two-stroke internal combustion engine (1') according to Claim 7 or 8, in which the volume of the exhaust channel (18) between the gas exhaust window (16) of the respective cylinder (2) and the multi-port switching valve (30) is at least 10% and/or no more than 180% of the geometric swept volume of the respective cylinder (2).

10. Two-stroke internal combustion engine (1') according to one of Claims 7 to 9, the multi-port switching valve (30) of which is designed as a roller valve.

11. Two-stroke internal combustion engine (1') according to one of Claims 7 to 10, the fresh gas overpressure line (32) of which is connected to a compressor unit on the inlet side.

12. Two-stroke internal combustion engine (1') according to Claim 11, the compressor unit of which is designed as a mechanically or electrically powered compressor.

13. Two-stroke internal combustion engine (1') according to Claim 11, the compressor unit of which is formed by an exhaust gas-powered charging device (40).

14. Two-stroke internal combustion engine (1) according to Claim 13, the exhaust gas-powered charging device (40) of which is designed as a diaphragm pump (42), which is connected on the secondary side via the fresh gas overpressure line (32) to the multi-port switching valve (30) and on the primary side to the exhaust channel (18).

15. Two-stroke internal combustion engine (1') according to one of Claims 7 to 14, the multi-port switching valve (30) of which is a designed as a three-way valve, via which a gas-side connection can be established between the gas exhaust window (16) and the primary side of the compressor unit as needed.

## Revendications

1. Procédé de fonctionnement d'un moteur à combustion interne à deux temps (1') avec un nombre de cylindres (2), dans lesquels est respectivement guidé un piston de travail (4) et dans lesquels du gaz de travail se trouvant sous pression peut se détendre en fournissant du travail, sachant que le ou chaque cylindre (2) comporte respectivement une ou plusieurs fenêtres d'échappement de gaz (16), qui sont respectivement reliées à un système d'échappement (12) par le biais d'un conduit d'échappement (18), sachant que dans une phase finale de la phase d'échappement du cylindre respectif (2), la liaison du côté des gaz entre toutes les fenêtres d'échappement des gaz (16) du cylindre respectif (2) et du système d'échappement (12) est interrompue et au lieu de cela toutes les fenêtres d'échappement des gaz (16) du cylindre respectif (2) sont sollicitées par des gaz frais se trouvant en surpression par le biais du conduit d'échappement (18).

2. Procédé selon la revendication 1, pour lequel une suralimentation et/ou augmentation de la densité de charge du volume des gaz se trouvant dans le cylindre (2) est produite par l'acheminement dans le cylindre (2) des gaz frais se trouvant en surpression.

3. Procédé selon la revendication 1 ou 2, pour lequel l'inversion de la liaison du côté des gaz, prévue dans la phase finale de la phase d'échappement est effectuée à un moment de démarrage à l'intérieur de la phase d'échappement après le point mort bas de la position de piston dans le cylindre (2) et avant la fermeture des fenêtres d'admission des gaz (14) du cylindre respectif (2) reliées à un conduit de transfert d'admission.

4. Procédé selon l'une quelconque des revendications 1 à 3, pour lequel l'inversion de la liaison du côté des gaz est terminée à l'intérieur de la phase d'échappement avec la fermeture des fenêtres d'échappement des gaz (16) par le piston (4) fonctionnant dans le cylindre (2) .

5. Procédé selon l'une quelconque des revendications 1 à 4, pour lequel pendant la phase d'échappement, les gaz d'échappement s'échappant du cylindre (2) sont acheminés dans un premier temps de cycle de la phase d'échappement entièrement ou partiellement au côté primaire d'un surpresseur de gaz d'échappement (40) et y sont ultérieurement détendus en fournissant du travail, avant que les gaz d'échappement redétendus se trouvant dans le côté primaire du surpresseur de gaz d'échappement (40) ne soient dirigés vers le système d'échappement (12) dans un deuxième temps de cycle de la phase d'échappement conjointement avec les gaz d'échappement se trouvant encore le cas échéant dans le cylindre (2).

6. Procédé selon la revendication 5, pour lequel l'énergie des gaz d'échappement convertie dans le surpresseur de gaz d'échappement (40) sur le côté primaire en travail d'expansion est entièrement ou partiellement convertie sur le côté secondaire en travail de compression des gaz frais prévus pour le remplissage dans le conduit d'échappement (18).

7. Moteur à combustion interne à deux temps (1') avec un nombre de cylindres, dans lesquels est respectivement guidé un piston de travail (4) et dans lesquels un gaz de travail se trouvant sous pression peut se détendre en fournissant du travail, sachant que le ou chaque cylindre (2) comporte respectivement une ou plusieurs fenêtres d'échappement de gaz (16), qui sont respectivement reliées à un système d'échappement (12) par le biais d'un conduit d'échappement (18),
***caractérisé par***
une soupape d'inversion multivoies (30) enclenchable disposée dans le conduit d'échappement (18), par le biais de laquelle toutes les fenêtres d'échappement de gaz (16) du cylindre respectif (2) sont reliées tant au système d'échappement (12) qu'à une conduite de surpression de gaz frais (32).

8. Moteur à combustion interne à deux temps (1') selon la revendication 7, pour lequel une liaison du côté des gaz peut être alternativement réalisée par le biais de la soupape d'inversion multivoies (30) entre les fenêtres d'échappement des gaz (16) et le système d'échappement (12) ou entre les fenêtres d'échappement des gaz (16) et la conduite de surpression de gaz frais (32).

9. Moteur à combustion interne à deux temps (1') selon la revendication 7 ou 8, pour lequel le volume du conduit d'échappement (18) entre la fenêtre d'échappement des gaz (16) respective du cylindre respectif (2) et la soupape d'inversion multivoies (30) est au moins 10 % et/ou au maximum 180 % du volume géométrique engendré par cylindre du cylindre respectif (2).

10. Moteur à combustion interne à deux temps (1') selon l'une quelconque des revendications 7 à 9, dont la soupape d'inversion multivoies (30) est exécutée sous la forme d'une soupape cylindrique.

11. Moteur à combustion interne à deux temps (1') selon l'une quelconque des revendications 7 à 10, dont la conduite de surpression de gaz frais (32) est reliée du côté admission à l'unité de compresseur.

12. Moteur à combustion interne à deux temps (1') selon la revendication 11, dont l'unité de compresseur est exécutée sous la forme d'un compresseur à entraînement mécanique ou électrique.

13. Moteur à combustion interne à deux temps (1') selon la revendication 11, dont l'unité de compresseur est formée par un dispositif de suralimentation fonctionnant aux gaz d'échappement (40).

14. Moteur à combustion interne à deux temps (1') selon la revendication 13, dont le dispositif de suralimentation fonctionnant aux gaz d'échappement (40) est exécuté sous la forme d'une pompe à membrane (42), qui est reliée du côté secondaire à une soupape d'inversion multivoies (30) par le biais de la conduite de surpression de gaz frais (32) et du côté primaire au conduit d'échappement (18).

15. Moteur à combustion interne à deux temps (1') selon l'une quelconque des revendications 7 à 14, dont la soupape d'inversion multivoies (30) est exécutée sous la forme d'une soupape à trois voies par le biais de laquelle une liaison du côté des gaz peut être réalisée en cas de besoin entre la fenêtre d'échappement des gaz (16) et le côté primaire de l'unité de compresseur.
